# EUROPÄISCHE PATENTSCHRIFT

(11) **EP 0 327 990 B1**
(45) Veröffentlichungstag und Bekanntmachung des Hinweises auf die Patenterteilung: **07.01.1993**
(21) Anmeldenummer: 89101880.6
(22) Anmeldetag: 03.02.1989
(51) Int. Cl.: B64D 11/06, B64D 9/00

(54) **Verbindungsvorrichtung,insbesondere für Fluggastsitze**
Anchor fitting, in particular for an aircraft passenger seat
Dispositif de liaison, en particulier pour un siège d'avion

(30) Priorität: 12.02.1988 DE 3804354
(43) Veröffentlichungstag der Anmeldung: 16.08.1989
(73) Patentinhaber: KEIPER RECARO GmbH & Co., D-42824 Remscheid (DE)
(72) Erfinder: Ligensa, Karl Heinz, D-7164 Obersontheim (DE)
(74) Vertreter: Patentanwälte Bartels und Partner

(56) Entgegenhaltungen:
- EP-A- 0 053 923
- DE-A- 3 447 178
- US-A- 3 605 637
- US-A- 4 256 424
- US-A- 4 376 522
- US-A- 4 708 549
- US-A- 4 771 969

## Beschreibung

Die Erfindung betrifft eine Vorrichtung zur Herstellung einer Verbindung zwischen einem Systemteil, insbesondere einem Fuß eines Fluggastsitzes, und einer im Querschnitt C-förmigen Lochschiene, welche die Merkmale des Oberbegriffs des Anspruches 1 aufweist.

Bei einer bekannten Vorrichtung dieser Art US-A-4 708 549 ist, wie bei vielen anderen entsprechenden Vorrichtungen, der Sicherungskörper, welcher die Aufgabe hat, die Verbindungsvorrichtung gegen eine Verschiebung in Längsrichtung cer Lochschiene zu sichern, zwischen den beiden Füßen des Grundkörpers angeordnet. Diese beiden Füße hintergreifen, um ein Abheben der Vorrichtung von der Lochschiene formschlüssig zu verhindern, je eines der Zungenpaare, die zwischen den aufeinander folgenden Löchern vorhanden sind und durch die gegeneinander weisenden Profilendabschnitte der Lochschiene gebildet werden. Mit Hilfe der Schraube und der sich auf der Schiene abstützenden Brücke können die Füße gegen die Unterseite der Zungen gespannt werden, wodurch sich eine spielfreie Verbindung der Vorrichtung mit der Lochschiene erreichen läßt. Greift an dieser bekannten Vorrichtung eine Zugkraft an, welche nicht nur in Längsrichtung der Lochschiene wirkt, sondern auch den Grundkörper von der Lochschiene abzuheben sucht, dann wird die Vorrichtung in Sinne eines Kippens um eine zwischen den beiden Füßen liegende Querachse belastet, was zur Folge hat, daß die im Sinne des Abhebens von der Lochschiene wirkende Kraftkomponente im wesentlichen von nur einem der beiden Füße und den beiden von ihm hintergriffenen Zungen der Lochschiene aufgenommen werden muß. Ein weiterer Nachteil der bekannten Vorrichtung besteht darin, daß die beiden Schenkel der Brücke, an die je die Hälfte des Sicherungskörpers angeformt sind, mit Spiel in je eine Ausnahmung des Grundkörpers eingreifen müssen. Dieses Spiel hat zur Folge, daß ein Teil der auf den Sicherungskörper wirkenden Kraft die Schraube auf Biegung beanspruchen kann, was unerwünscht ist, da diese Schraube leichtgängig sein muß, um möglichst rasch die Verbindung der Vorrichtung mit der Lochschine herstellen und wieder lösen zu können.

Bei einer anderen bekannten Verbindungsvorrichtung (US-A-4 376 522) ist zwar einer der beiden Füße zwischen dem Sicherungskörper und dem anderen Fuß angeordnet. Die Brücke, deren beide Schenkel sich auf der Oberseite der Lochschiene abstützen, ist jedoch oberhalb des einen Fußes angeordnet, so daß nur dieser und nicht auch der andere Fuß spielfrei an der Lochschiene anliegt und die Schraube der Brücke auf Biegung beansprucht werden kann. Ferner ist zusätzlich zu der Brücke für die Betätigung des Sicherungskörpers ein Schwenkhebel erforderlich, der eine Sicherungseinrichtung benötigt, um nicht ungewollt geschwenkt werden zu können. Hierdurch wird nicht nur der Aufwand wesentlich vergrößert, vor allem läßt sich nicht ausschließen, daß verscheutlich nur die Schraube festgezogen und nicht auch der Schwenkhebel sowie der Sicherungskörper in die Verriegelungsstellung gebracht werden.

Der Erfindung liegt die Aufgabe zugrunde, eine Vorrichtung der eingangs genannten Art zu schaffen, die günstigere Kraftübertragungsverhältnisse ergibt. Diese Aufgabe löst eine Vorrichtung mit den Merkmalen des Anspruches 1.

Die Anordnung des einen Fußes zwischen dem Sicherungskörper und dem anderen Fuß hat zur Folge, daß bei einer im Winkel zur Längsachse der Lochschiene verlaufenden Zugbeanspruchung beide Füße und damit auch zwei Zungenpaare der Lochschiene beansprucht werden, und zwar annähernd in gleichem Maße. Da ferner beim Andrücken der Brücke mittels der Schraube an die Schiene auf die Brücke dann, wenn sich deren Schenkel auf der Lochschiene abstützen, ein Moment im Sinne einer Schwenkbewegung der mit dem Sicherungskörper verbundenen Endabschnitte der Schenkel gegen die Lochschiene hin bewirkt wird, genügt eine einzige Schraube, um sowohl den Sicherungskörper in eines der Löcher der Lochschiene einzuführen oder aus diesem Loch auszuheben als auch die Füße des Grundkörpers gegen die Zungen der Lochschiene zu spannen oder diese Spannung aufzuheben.

Bei einer bevorzugten Ausführungsform ist der Sicherungskörper gemäß Anspruch 2 unmittelbar mit dem Grundkörper formschlüssig verbunden, wodurch sichergestellt ist, daß die Brücke und die Schraube durch die vom Sicherungskörper zu übertragenden Kräfte nicht beansprucht werden. Konstruktiv besonders einfach ist dabei eine Ausgestaltung des Sicherungskörpers und der Verbindung mit dem Grundkörper gemäß Anspruch 3. Der Sicherungskörper kann gemäß Anspruch 4 abgeflacht sein. Es bereitet dann keine Schwierigkeiten, ihn unmittelbar neben demjenigen Zungenpaar in die Lochschiene eingreifen zu lassen, das von benachbarten Fuß des Grundkörpers hintergriffen wird.

Da die von der Brücke auf den Sicherungskörper zu übertragenden Kräfte nur das Einfahren des Sicherungskörpers in ein Loch der Lochschiene und das Ausheben eines solchen Loches bewirken müssen, genügt eine konstruktiv einfache Verbindung gemäß Anspruch 5 zwischen diesen beiden Bauteilen.

Bei einer bevorzugten Ausführungsform sind die Schenkel der Brücke oberhalb ihrer Abstützfläche mit einem Durchbruch versehen, in welchen die beiden Endabschnitte eines den Grundkörper durchdringenden Querstiftes oder zweier miteinander fluchtender Zapfen mit einem Spiel gemäß Anspruch 6 eingreifen. Aus der Lage des Stift- oder Zapfenendes im Durchbruch ist, wenn die Schraube festgezogen wird, erkennbar, ob der Sicherungskörper ordnungsgemäß in eines der Löcher der Lochschiene eingreift oder auf einem Zungenpaar aufsitzt.

Die Merkmale des Anspruches 8 tragen dazu bei, die an sich schon einfache Montage noch weiter zu erleichtern, da sie das Erkennen der richtigen Position der Vorrichtung bezüglich der Löcher der Schiene ermöglichen.

Im folgenden ist die Erfindung anhand eines in der Zeichnung dargestellten Ausführungsbeispieles im einzelnen erläutert. Es zeigen
- Fig. 1: eine Draufsicht des Ausführungsbeispiels,
- Fig. 2: eine teilweise im Schnitt dargestellte Seitenansicht des Ausführungsbeispiels im Zustand der festen Verbindung mit der Schiene,
- Fig. 3: eine Seitenansicht des Ausführungsbeispiels im eingesetzten, jedoch mit der Schiene noch nicht verbundenen Zustand,
- Fig. 4: einen Schnitt nach Linie IV-IV der Fig. 3,
- Fig. 5: einen Schnitt nach Linie V-V der Fig. 2.

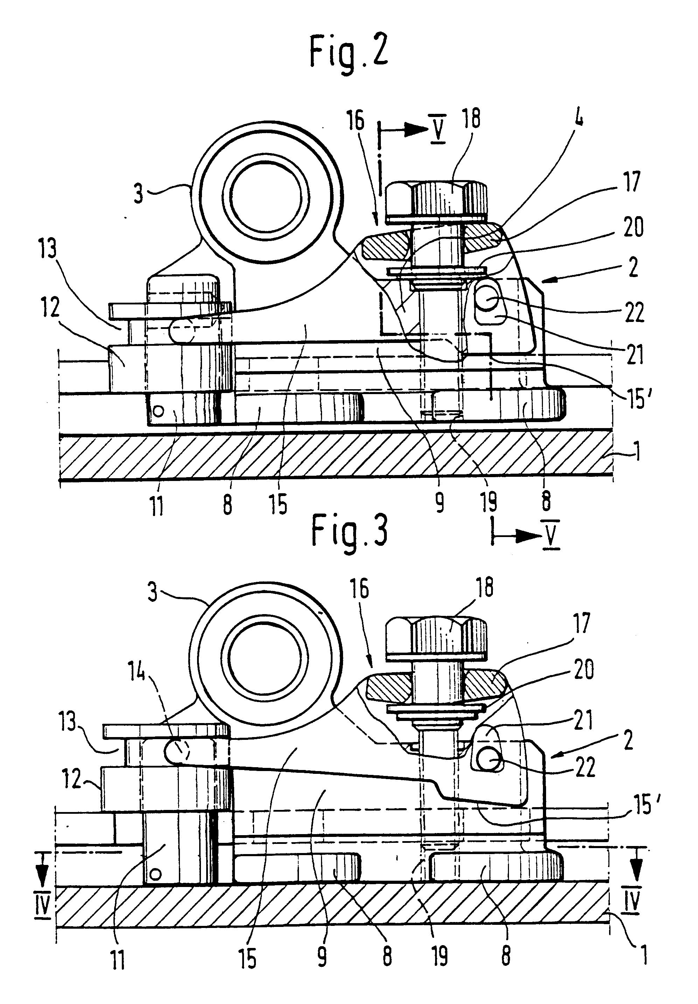

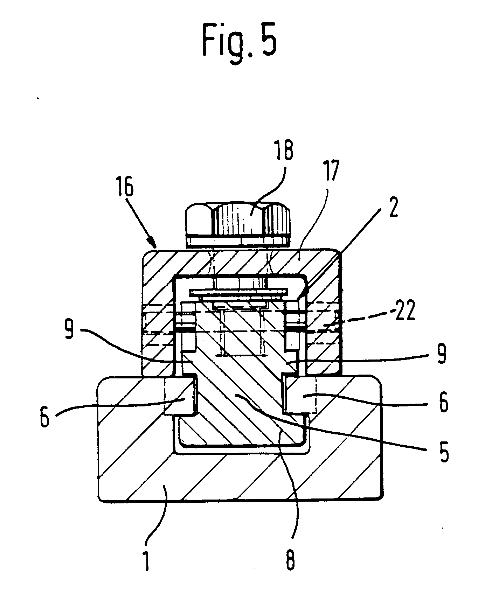

Eine Vorrichtung zur Herstellung einer formschlüssigen Verbindung zwischen einem Fuß eines Fluggastsitzes und einer am Fußboden festgelegten, in bekannter Weise ausgebildeten Schiene 1 weist einen einstückig ausgebildeten Grundkörper 2 auf. Wie die Figuren 2 und 3 zeigen, bildet der Grundkörper auf seiner der Schiene 1 abgekehrten Seite eine querliegende Nabe 3 zur Aufnahme eines den Grundkörper 2 mit dem Fuß des Fluggastsitzes verbindenden Bolzens. Die Nabe 3, deren Bohrung im Anschluß an einen zylindrischen Mittelabschnitt zwei sich nach außen konisch erweiternde Endabschnitte hat, um ein Verklemmen des Bolzens zu verhindern, ist an einen blockförmigen Mittelteil 4 angeformt. Auf der der Nabe abgekehrten Seite bildet der Mittelteil 4 einen im Grundriß rechteckförmigen Steg 5, dessen quer zur Längsrichtung der Schiene 1 gemessene Breite etwas kleiner ist als die Weite des Schlitzes, den die gegeneinander weisenden Zungen 6 der Schiene begrenzen. Die Länge des Steges 5 ist, wie Fig. 4 zeigt, so gewählt, daß er sich vom Anfang eines ersten Zungenpaares bis zum Ende des nächstfolgenden Zungenpaares erstreckt und in seiner Mitte auf die Mitte eines der Löcher 7 der Schiene 1 ausgerichtet ist.

An die Unterseite des Steges 5 sind in dessen Längsrichtung in einem Abstand voneinander, der gleich dem Abstand zweier benachbarter Löcher 7 entspricht, zwei plattenförmige Füße 8 angeformt, die seitlich über den Steg 5 überstehen und dadurch in der Lage sind, die Zungen 6 zu untergreifen. Die seitlich über den Steg 5 überstehenden Teile der Füße 8 haben eine kreisbogenförmige Kontur, wobei der Radius geringfügig kleiner ist als der Radius der Löcher 7, damit die Füße 8 durch die Löcher 7 hindurch in die Schiene eingeführt und wieder ausgehoben werden können. Die Füße 8 könnten die Form je einer vollständigen Kreisscheibe haben. Im Ausführungsbeispiel haben sie jedoch die Form eines Kreisabschnittes, wobei der geradlinige Teil der Kontur in Querrichtung der Schiene 1 verläuft und zumindest annähernd auf die eine bzw. andere schmale Endfläche des Grundkörpers 2 ausgerichtet ist.

In einem Abstand von der Oberseite der Füße 8, der etwas größer ist als die Dicke der Zungen 6, weist der Grundkörper 8 auf beiden Seiten eine über den Steg 5 seitlich überstehende Materialpartie 9 auf, welche zusammen mit dem Steg 5 und den Füßen 8 je eine seitliche Nut bilden, in welche die Zungen 6 eingreifen, wenn der Grundkörper 2 in die Schiene 1 eingesetzt ist.

An die eine Schmalseite des Mittelteils 4 ist ein Abstandhalter 10 angeformt, an den seinerseits ein Zapfen 11 angeformt ist. Die Längsachse dieses Zapfens 11, dessen untere Stirnfläche in der von der Unterseite der Füße 8 definierten Ebene liegt, steht senkrecht auf dieser Ebene. Der Abstand zwischen dem Zapfen 11 und dem Grundkörper 2 ist so gewählt, daß der Zapfen 11 auf die Mitte eines der Löcher 7 ausgerichtet ist, wenn die Füße 8 sich unterhalb von zwei in Schienenlängsrichtung aufeinander folgenden Zungenpaaren befindet. Wie Fig. 4 zeigt, ist weiterhin der Durchmesser des Zapfens 11 größer als die Breite des Abstandhalters 10, jedoch wesentlich kleiner als der Durchmesser der Löcher 7.

Auf dem Zapfen 11 ist längsverschiebbar ein Sicherungskörper 12 angeordnet. Der im Querschnitt C-artige Sicherungskörper 12 hat auf der dem Grundkörper 2 zugekehrten Seite eine ebene Mantelfläche, welche sich an die Stirnseite des Grundkörpers 2 anzulegen vermag. Da der Sicherungskörper 12 in beide Nuten eingreift, welche vom Grundkörper 2, dem Abstandhalter 10 und dem Zapfen 11 gebildet sind, ist er in Richtungen quer zur Längsrichtung des Zapfens 11 formschlüssig mit dem Grundkörper 2 verbunden. Der für den Eingriff in eines der Löcher 7 bestimmte untere Teil des Sicherungskörpers 12 hat im Bereich seiner zylindrisch gekrümmten Mantelfläche einen Radius, der geringfügig kleiner ist als der Radius der Löcher 7. Daher dann der Sicherungskörper 12 in eines der Löcher 7 eingesetzt und aus diesem ausgehoben werden. Im eingesetztem Zustand sichert er formschlüssig den Grundkörper 2 gegen eine Verschiebung in Schienenlängsrichtung.

In seinem im eingesetztem Zustand über die Oberseite der Schiene 1 überstehenden Abschnitt ist der Sicherungskörper 12 mit einer Ringnut 13 versehen, in welche zwei Zapfen 14 eingereifen, welche an der Innenseite der beiden Schenkel 15 einer wie der Grundkörper 2 und der Sicherungskörper 12 aus Stahl bestehenden Brücke 16 vorgesehen sind. Die Brücke 16, deren beide Schenkel 15 zusammen mit einem sie verbindenden Jochteil 17 ein zum Grundkörper 2 hin offenes U-Profil bilden, übergreifen von oben her den neben der Nabe 3 liegenden Teil des Grundkörpers 2. Eine Schraube 18, welche einen Durchbruch des Jochteils 17 durchdringt, greift in eine parallel zum Sicherungskörper 12 angeordnete Gewindebohrung 19 des Grundkörpers 2 ein. Mittels dieser Schraube 18 kann die Brücke 16 nicht nur gegen die Schiene 1 hin bewegt, sondern, dank eines auf dem Schraubenschaft fest angeordneten Ringes 20, der sich an die Unterseite des Jochteiles 17 anlegen kann, auch von der Schiene 2 wegbewegt werden.

Die beiden Schenkel 15 der Brücke 16 bilden von der durch die Schraube 18 definierten Querebene aus zum Sicherungskörper 12 hin einen langen und in der entgegengesetzten Richtung einen kurzen Hebelarm. Jeder kurze Hebelarm bildet eine über die Unterseite des langen Hebelarms gegen die Schiene 1 hin vorspringende Auflagefläche 15′, welche sich, wie Fig. 2 zeigt, vollständig an die Oberseite der Schiene 1 anlegt, wenn die Schraube 18 festgezogen ist und der Sicherungskörper 12 sich in einem der Löcher 7 befindet. Die Abstützung der Brücke 16 mittels der Auflagefläche 15′ auf der Oberseite der Schiene 1 hat zur Folge, daß beim Festziehen der Schraube 18 die Füße 8 gegen die Unterseite der Zungen 6 gespannt werden.

Oberhalb der Auflagefläche 15′ sind beide Schenkel 15 mit je einem Durchbruch 21 versehen, der sowohl in Längsrichtung der Schraube 18 als auch quer dazu in seinen Abmessungen größer ist als ein in ihn eingreifender Querstift 22 des Grundkörpers 2. Die schwenkbare Verbindung der Brücke 16 mittels des Querstiftes 22 mit dem Grundkörper 2 hat zur Folge, daß, wie Fig. 3 zeigt, beim Herausdrehen der Schraube 18 aus der Gewindebohrung 19 die Schenkel 15 eine Schwenkbewegung im Sinne des Heraushebens des Sicherungskörpers 12 aus der Schiene 1 ausführen. Außerdem begrenzt der Querstift das Maß, um das die Schraube 18 herausgedreht werden kann. Ferner läßt die Position des Querstiftes 22 im Durchbruch 21 erkennen, ob beim Festziehen der Schraube 18 der Sicherungskörper 12 in eines der Löcher 7 eindringt oder in Anlage an die Oberseite der Schiene 1 kommt. Im letztgenannten Falle befindet sich der Querstift 22 im unteren Teil des Durchbruches 21, wie dies Fig. 3 zeigt, und nicht im oberen Teil, wie dies Fig. 2 zeigt. Solange die Schraube 18 noch nicht festgezogen ist, erlaubt die Auflage des Jochteils der Brücke 16 eine Pendelbewegung, wozu auch das Spiel des Querstiftes 22 im Durchbruch 21 und der sowohl eine Verschwenkung als auch eine Verschiebung ermöglichende Eingriff der Zapfen 14 in die Ringnut 13 beitragen. Infolge der pendelnden Bewegbarkeit der Brücke 16 kann diese sich beim Festziehen der Schraube 18 stets so einstellen, daß die Auflageflächen 15′ vollflächig in Anlage an die Schiene 1 kommen.

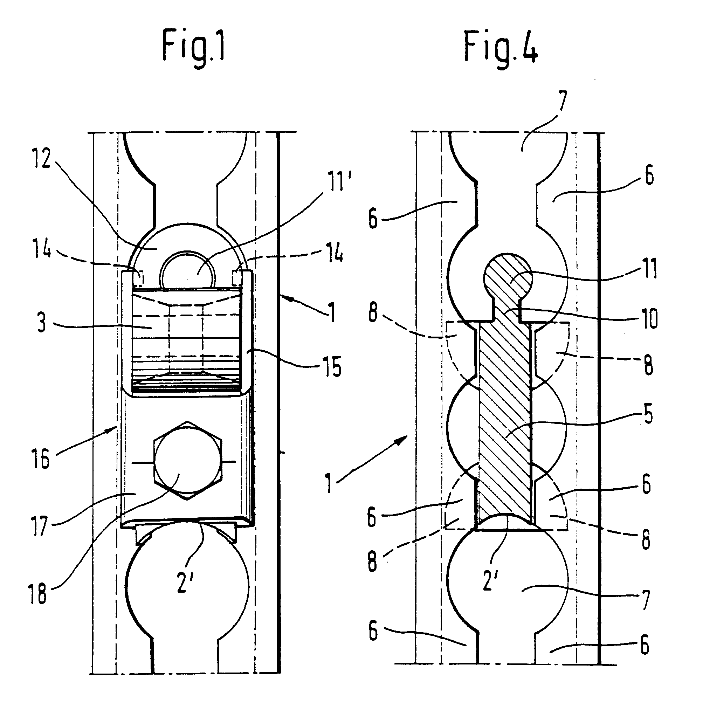

Wie die Fig. 1 und 4 zeigen, ist die dem Sicherungskörper 12 abgekehrte schmale Endfläche 2′ des Grundkörpers 2 zylindrisch gekrümmt, wobei der Krümmungsradius gleich dem Radius der Löcher 7 ist und die Endfläche 2′ auf eines der Löcher 7 ausgerichtet ist, wenn auch der Sicherungskörper 12 auf eines der Löcher 7 ausgerichtet ist. Daher kann sich an die Endfläche unmittelbar der Sicherungskörper einer zweiten, gleich ausgebildeten Vorrichtung anschließen. Insbesondere läßt sich aber leicht erkennen, ob die Vorrichtung sich in der für das Verbinden mit der Schiene 1 richtigen Position befindet.

Um eine Verbindung zwischen dem Fuß des Fluggastsitzes und der Schiene 1 herzustellen, brauchen nur die beiden Füße 8 des Grundkörpers 2 durch zwei der Löcher 7 der Schiene 1 hindurch in das Innere der Schiene eingeführt und sodann der Grundkörper um den halben Lochabstand in Schienenlängsrichtung verschoben zu werden, um dann durch ein Festziehen der Schraube 18 spielfrei mit der Schiene 1 verbunden zu werden, wobei die Füße 8 nach oben gerichtete Kräfte und der Sicherungskörper 12 in Längsrichtung verlaufende Kräfte in die Schiene 1 einleiten. Zum Lösen der Verbindung braucht nur die Schraube 18 so weit aus der Gewindebohrung 19 herausgedreht zu werden, bis der Sicherungskörper 12 aus der Schiene 1 ausgehoben ist. Nach einer Verschiebung des Grundkörpers in Schienenlängsrichtung um eine halbe Lochteilung können dann die Füße 8 ebenfalls aus der Schiene 1 ausgehoben werden.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Vorrichtung zur Herstellung einer Verbindung zwischen einem Systemteil, insbesondere Füßen eines Fluggastsitzes, und einer im Querschnitt C-förmigen Lochschiene, die auf ihrer durch die gegeneinander weisenden Profilendabschnitte gebildeten Seite mit in Schienenlängsrichtung in einer Reihe und mit gleichen Zwischenräumen angeordneten Löchern versehen ist, welche folgende Merkmale aufweist:
a) einen Grundkörper (2), an dessen in den Längskanal der Schiene (1) durch deren Löcher (7) hindurch einsetzbarem Fußteil (5) zwei im Lochabstand zueinander mittig angeordnete Füße (8) vorgesehen sind, deren Breite größer ist als die Breite des Schlitzes der Schiene (1),
b) eine den Grundkörper (2) von oben her quer zur Schienenlängsrichtung übergreifende Brücke (16) , die zwei den Grundkörper (2) zwischen sich aufnehmende und auf der Schiene (1) abstützbare Schenkel (15) aufweist und deren die Schenkel verbindender Jochteil (17) von einer Schraube (18) durchdrungen wird, die in eine Gewindebohrung (19) des Grundkörpers (2) eingreift,
c) einen Sicherungskörper (12), der zumindest auf einem Teil seines Umfangs eine an die Lochkontur angepaßte Außenkontur hat und mittels der beiden Schenkel (15) der Brücke (16) relativ zu den Füßen (8) höhenverstellbar ist,
dadurch gekennzeichnet, daß
d) der Sicherungskörper (12) mittels Zapfen (14) Schwenkbar mit den Schenkeln (15) verbunden ist,
e) die beiden Schenkel (15) der Brücke (16) mit je einem Durchbruck (21) für den Eingriff eines aus dem Grundkörper (2) herausragenden Querstiftes (22) versehen sind,
f) einer der beiden Füße (8) zwischen dem Sicherungskörper (12) und dem anderen Fuß (8) angeordnet ist,
g) der von der Schraube (18) durchdrungene Bereich der Brücke auf den Raum zwischen dem Sicherungskörper (12) und dem Querstift (22) ausgerichtet und so bezüglich der Abstützstelle (15') der beiden Schenkel angeordnet ist, daß eine Belastung der Brücke (16) durch die Schraube (18) gegen die Schiene (1) ein Drehmoment im Sinne einer Schwenkbewegung der mit dem Sicherungskörper (12) verbundenen Endabschnitte der Schenkel (15) gegen die Schiene (1) ergibt.

2. Vorrichtung nach Anspruch 1, dadurch gekennzeichnet, daß der Sicherungskörper (12) längsverschiebbar auf einem Zapfen (11) des Grundkörpers (2) angeordnet ist und die Endabschnitte der Schenkel (15) mit dem Sicherungskörper (12) schwenkbar verbunden sind.

3. Vorrichtung nach Anspruch 2, dadurch gekennzeichnet, daß der Sicherungskörper (12) eine den Zapfen (11) aufnehmende Lälngsbohrung aufweist, in die ein radialer Schlitz mündet, dessen Weite kleiner ist als der Durchmesser der Längsbohrung, und in den ein Steg (10) eingreift, dar den Zapfen (11) mit dem Grundkörper (2) verbindet.

4. Vorrichtung nach Anspruch 2 oder 3, dadurch gekennzeichnet, daß der Sicherungskörper (12) auf seiner dem Grundkörper zugekehrten Seite abgeflacht ist.

5. Vorrichtung nach einem der Ansprüche 2 bis 4, dadurch gekennzeichnet, daß die schwenkbare Verbindung der Schenkel mit dem Sicherungskörper durch je einen zapfenförmigen, in eine Ringnut des Sicherungskörpers (12) eingreifenden Vorsprung (14) an beiden Schenkelendabschnitten gebildet ist.

6. Vorrichtung nach einem der Ansprüche 1 bis 5, dadurch gekennzeichnet, daß die beiden Schenkel (15) der Brücke (16) je mit einem Durchbruch (21) versehen sind, der in Richtung der Längsachse der Schraube (18) eine Abmessung hat, die größer ist als die Abmessung eines in je einen der Durchbrüche (21) eingreifenden Vorsprungs (22), welcher sich am Grundkörper (2) befindet.

7. Vorrichtung nach einem der Ansprüche 1 bis 6, dadurch gekennzeichnet, daß die Schraube (18) mit einem an die dem Grundkörper (2) zugekehrte Unterseite des Jochteils (17) der Brücke (16) anlegbaren Mitnehmerring (20) versehen ist.

8. Vorrichtung nach einem der Ansprüche 1 bis 7, dadurch gekennzeichnet, daß die dem Sicherungskörper (12) in Längsrichtung der Vorrichtung gegenüberliegende Endfläche (2′) des Grundkörpers (2) hohlzylindrisch gekrümmt ist und einen Krümmungsradius hat, der demjenigen der Löcher (7) angepaßt ist, und daß die Endfläche (2′) mit dem Rand eines der Löcher (7) zumindest dann fluchtet, wenn der Sicherungskörper (12) auf eines der Löcher (7) ausgerichtet ist.

## Claims

1. Device for the production of a connection between one system part, in particular the feet of an aeroplane passenger seat, and a rail which has holes and is C-shaped in cross-section, which is provided on the side thereof that is formed by the profiled end sections pointing towards one another, with holes that are arranged in a row in the longitudinal direction of the rail and are at equal distances from one another, which has the following features:
a) a basic body (2) on the foot part (5) of which, which may be caused to penetrate in an engaging manner into the longitudinal channel of the rail (1) through its holes (7), there are provided two feet (8) disposed centrally at the same distance from one another as the holes, the width of which feet is greater than the width of the slot of the rail (1);
b) a bridge (16) engaging over the basic body (2) from above, transversely to the longitudinal direction of the rail, which bridge has two legs (15) which take up the basic body (2) between them and are supported on the rail (1), and of which the yoke part (17) connecting the legs is penetrated by a screw (18), which engages in a threaded bore (19) of the basic body (2);
c) a securing element (12) which has, at least on one part of its circumference, an external contour that is adapted to the contour of the holes, and the height of which may be adjusted in relation to the feet (8) by means of the legs (15) of the bridge (16);
characterised in that
d) the securing element (12) is pivotably connected to the legs (15) by means of pins (14);
e) the two legs (15) of the bridge (16) are provided, in each case, with an aperture (21) for the engagement of a transverse pin (22) which projects from the basic body;
f) one of the two feet (8) is arranged between the securing element (12) and the other foot (8);
g) the area of the bridge that is penetrated by the screw (18) is disposed on the chamber between the securing element (12) and the transverse pin (22), and is arranged in such a way in relation to the point of support that a loading of the bridge (16) by the screw (18) against the rail (1) produces a torque in the manner of a pivot movement of the end sections of the legs (15), which end sections are connected to the securing element (12), against the rail (1).

2. Device according to Claim 1,
characterised in that the securing element (12) is arranged in a longitudinally displaceable manner on a pin (11) of the basic body (2) and the end sections of the legs (15) are pivotably connected to the securing element (12).

3. Device according to Claim 2,
characterised in that the securing element (12) has a longitudinal bore which takes up the pin (11), into which longitudinal bore a radial slot opens, the width of which is smaller than the diameter of the longitudinal bore, and in which a crosspiece (10), which connects the pin (11) to the basic body (2), engages.

4. Device according to Claim 2 or Claim 3,
characterised in that the securing element (12) is flattened on the side thereof that is turned towards the basic body.

5. Device according to one of Claims 2 to 4,
characterised in that the pivotable connection of the legs with the securing element is formed in each case by one pin-shaped projection (14), which engages in an annular groove of the securing element (12) and is formed at either end of the leg end sections.

6. Device according to one of Claims 1 to 5,
characterised in that the two legs (15) of the bridge (16) are each provided with an aperture (21), the measurement of which, in the direction of the longitudinal axis of the screw (18), is greater than the measurement of one of the projections (22), engaging in the openings (21), which projection is located on the basic body (2).

7. Device according to one of Claims 1 to 6,
characterised in that the screw (18) is provided on the underside of the yoke part (17) of the bridge (16) that faces the basic body (2), with a friction disc (20) that may be applied.

8. Device according to one of Claims 1 to 7,
characterised in that the securing element (12) is curved in a hollow cylindrical manner in the longitudinal direction of the end surface (2') of the basic body (2) that is opposite the device, and has a radius of curvature that is adapted to that of the holes (7), and in that the end surface (2') is aligned with the edge of one of the holes (7) at least when the securing element (12) is directed onto one of the holes (7).

## Revendications

1. Dispositif pour la réalisation d'une liaison entre une partie de système, particulièrement les pieds d'un siège d'avion et un rail perforé à coupe transversale en C, qui est muni, sur son côté formé par les sections d'extrémité de profil tournées l'une vers l'autre, de trous, disposés dans le sens longitudinal du rail en une rangée et avec des intervalles égaux, lequel dispositif présente les caractéristiques suivantes:
a) un corps de base (2), à la partie formant pied (5) duquel - insérable dans le canal longitudinal du rail (1) à travers les trous de celui-ci - deux pieds (8) sont prévus, à la distance d'un intertrou, disposés axialement l'un par rapport à l'autre et dont la largeur est plus grande que celle de la fente du rail (1),
b) un cavalier (16) qui enjambe le corps de base (2) transversalement au sens longitudinal du rail, cavalier qui présente deux branches (15) enjambant le corps de base (2) et appuyables sur le rail (1), et dont la partie en forme de joug (17) reliant les jambages est traversée par une vis (18) qui s'engage dans un perçage fileté (19) du corps de base (2),
c) une pièce d'ancrage (12) qui possède au moins sur une partie de son périmètre un contour extérieur adapté au contour des trous et qui, au moyen des deux branches (15) du cavalier (16), est réglable en hauteur par rapport aux pieds (8),
caractérisé en ce que
d) la pièce d'ancrage (12) est reliée en rotation avec les branches (15) au moyen de pivots (14),
e) les deux branches (15) du cavalier (16) sont prévues chacune avec une lumière (21) pour la saisie par une goupille transversale (22) dépassant du corps de base (2),
f) l'un des deux pieds (8) est disposé entre la pièce d'ancrage (12) et l'autre pied (8),
g) la région du cavalier traversée par la vis (18) est disposée sur l'espace entre la pièce d'ancrage (12) et la goupille transversale (22) et positionnée en fonction de la zone d'appui (15') des deux branches, de sorte qu'une pression du cavalier (16) contre le rail (1) par la vis (18) occasionne un moment de rotation faisant basculer les sections terminales des branches (15) contre le rail (1).

2. Dispositif selon la revendication 1, caractérisé en ce que la pièce d'ancrage (12) est disposée de manière à se déplacer dans le sens longitudinal sur un tourillon (11) du corps de base (2), et en ce que les sections terminales des branches (15) sont reliées en en rotation avec la pièce d'ancrage (12).

3. Dispositif selon la revendication 2, caractérisé en ce que la pièce d'ancrage (12) présente un perçage longitudinal recevant le tourillon (11), où débouche une fente radiale, dont la largeur est plus petite que le diamètre du perçage longitudinal, et dans laquelle s'engage un épaulement (10) qui relie le tourillon (11) avec le corps de base (2).

4. Dispositif selon l'une quelconque des revendication 2 ou 3, caractérisé en ce que à la distance d'un intertrou la pièce d'ancrage (12) est amincie sur son côté tourné vers le corps de base.

5. Dispositif selon l'une quelconque des revendications 2 à 4, caractérisé en ce que la liaison de rotation des branches avec la pièce d'ancrage est réalisée chaque fois sur les deux bouts des branches par une saillie (14) en forme de pivot s'engageant dans une gorge circulaire de la pièce d'ancrage (12).

6. Dispositif selon l'une quelconque des revendications 1 à 5, caractérisé en ce que les deux branches (15) du cavalier (16) sont munies chacune d'un passage (21) qui,dans le sens longitudinal de la vis (18), a une dimension plus grande que celle d'une saillie (22) s'engageant chaque fois dans l'un des passages (21), saillie qui est située sur le corps de base (2).

7. Dispositif selon l'une quelconque des revendications 1 à 6, caractérisé en ce que la vis (18) est munie d'une rondelle d'entraînement (20) pouvant épauler la face inférieure, tournée vers le corps de base (2), de la partie en forme de joug (17) du cavalier (16).

8. Dispositif selon l'une quelconque des revendications 1 à 7, caractérisé en ce que la surface terminale (2') du corps de base (2), placée longitudinalement par rapport au dispositif en face de la pièce d'ancrage (12), est courbée en cylindre creux et possède un rayon de courbure qui est adapté à celui des trous (7), et en ce que la surface terminale (2') s'aligne avec le bord d'un des trous (7) au moins lorsque la pièce d'ancrage (12) est placée sur l'un des trous (7).
